# EUROPÄISCHE PATENTSCHRIFT

(11) **EP 4 262 381 B1**
(45) Veröffentlichungstag und Bekanntmachung des Hinweises auf die Patenterteilung: **06.11.2024**
(21) Anmeldenummer: 21820490.7
(22) Anmeldetag: 25.11.2021
(51) Int. Cl.: A01M 7/00, A01B 79/00, G06T 7/00, G06V 10/10, G06V 10/98, G06V 20/10

(54) **VERFAHREN ZUM KLASSIFIZIEREN VON PFLANZEN FÜR LANDWIRTSCHAFTLICHE ZWECKE**
METHOD FOR CLASSIFYING PLANTS FOR AGRICULTURAL PURPOSES
PROCÉDÉ POUR LA CLASSIFICATION DE PLANTES À DES FINS AGRICOLES

(30) Priorität: 15.12.2020 DE 102020215876
(43) Veröffentlichungstag der Anmeldung: 25.10.2023
(73) Patentinhaber: Robert Bosch GmbH, 70442 Stuttgart (DE)
(72) Erfinder: WEIMER, Andreas, 71116 Gaertringen (DE); KHANI, Farid, 70599 Stuttgart (DE)
(86) Internationale Anmeldenummer: PCT/EP2021/082920
(87) Internationale Veröffentlichungsnummer: WO 2022/128382

(56) Entgegenhaltungen:
- DE-A1- 102017 210 804
- DE-A1- 102017 217 258
- DE-A1- 102018 217 742
- DE-A1- 102018 222 428

## Beschreibung

### Stand der Technik

Die Erfindung betrifft ein Verfahren zum Klassifizieren von Pflanzen, insbesondere für landwirtschaftliche Zwecke, eine entsprechende Klassifizierungseinheit und eine landwirtschaftliche Spritzvorrichtung zum Ausbringen eines Mediums, insbesondere flüssigen Spritzmittels nach Gattung der unabhängigen Ansprüche.

Bei Multikameraanwendungen sind Stitching Algorithmen bekannt, bei denen in benachbarten Bildern nach gleichen Strukturen gesucht und diese dann zu einem großen Bild zusammengesetzt werden.

Dies Verfahren ist jedoch bei Systemen nicht anwendbar, wenn kein Datenfluss zwischen den Kameras erfolgt und/oder die benötigte Laufzeit/Rechenleistung zu hoch ist. Dies ist oft bei landwirtschaftlichen Anwendungen, wie bspw. auf Feldspritzen nicht der Fall, da die Kameras autark funktionieren müssen, d.h. Daten der Nachbarkameras nicht zur Verfügung stehen, und ferner kürzere Laufzeiten und geringere Rechenleistungen auf wirtschaftlichen Gründen notwendig sind.

Eine Herausforderung, die sich bei ungestitchten Bildern im landwirtschaftlichen Bereich ergibt ist, dass Pflanzenobjekte die sich am Bildrand befinden und somit nur teilweise sichtbar sind, ggf. Fehlklassifiziert werden. Hierbei kann es zu falschen Zuordnung von Kulturpflanzenteilen kommen, wenn Kulturpflanzen bzw. eine Kultur-Pflanzreihe durch den Rand des Sichtfelds geschnitten werden, da diese Teile meistens per Definition als Beikräuter/Unkräuter klassifiziert werden.

Ein Verfahren zur Klassifizierung von Pflanzen ist aus der DE 10 2017 210 804 A1 bekannt. Bei dem bekannten Verfahren wird mittels einer optischen und/oder Infrarot-Erfassungseinheit ein Bereich einer Nutzfläche erfasst und die erfassten Bilddaten ausgewertet. Ziel ist es, Nutzpflanzen zu erkennen, die in Form von Pflanzenreihen angeordnet sind, um dadurch die Nutzpflanzen von zwischen den Nutzpflanzen bzw. Pflanzenreihen sich befindlichen Pflanzen unterscheiden zu können, die insbesondere als Unkraut klassifiziert werden, um dieses beispielsweise mittels entsprechender Spritzmittel behandeln zu können.

Die DE 10 2017 217 258 A1 offenbart ein Verfahren zum Klassifizieren von auf einem Feld wachsenden Pflanzen.

Die DE 10 2018 217 742 A1 offenbart ein Verfahren zum Ausbringen eines Pflanzenschutzmittels auf ein Feld mittels einer Spritzvorrichtung.

### Offenbarung der Erfindung

Gegenstand der vorliegenden Erfindung ist ein Verfahren zum Klassifizieren von Pflanzen, insbesondere für landwirtschaftliche Zwecke, mit folgenden Schritten:
- Erfassen eines Feldabschnitts mit Pflanzen mittels einer gegenüber dem Feldabschnitt geneigten optischen Erfassungseinheit, um eine Bildinformation, welche einen hinteren Bildrand mit einer Bildbreite B(Bild,h) und einen vorderen Bildrand mit einer größeren Bildbreite B(Bild,v) aufweist, zu erhalten;
- Klassifizieren der Pflanzen in der erhaltenen Bildinformation in zumindest eine erste Pflanzenklasse und in zumindest eine zweite Pflanzenklasse mittels eines Algorithmus, um in Abhängigkeit davon Pflanzen der zweiten Pflanzenklasse mit einem Medium, insbesondere flüssigen Spritzmittel zu behandeln, wobei
- der Schritt des Klassifizierens einen Schritt des Reklassifizierens umfasst, in dem klassifizierte Pflanzen von der zweiten Pflanzenklasse in die erste Pflanzenklasse mittels des Algorithmus reklassifiziert werden, wenn diese sich in einem durch eine definierte Bildtrennlinie definierten hinteren Bildabschnitt der Bildinformation von einem seitlichen Bildrand der Bildinformation bis höchstens zu einer definierten Reklassifizierungsgrenzlinie erstrecken.

Gegenstand der vorliegenden Erfindung ist ferner eine Klassifizierungseinheit die dazu eingerichtet ist, folgende Schritte durchzuführen:
- Klassifizieren von Pflanzen in einer erhaltenen Bildinformation in zumindest eine erste Pflanzenklasse und in zumindest eine zweite Pflanzenklasse mittels eines Algorithmus; und
- Reklassifizieren von klassifizierten Pflanzen aus der zweiten Pflanzenklasse in die erste Pflanzenklasse mittels des Algorithmus, wenn diese sich in einem durch eine definierte Bildtrennlinie definierten hinteren Bildabschnitt der Bildinformation von einem seitlichen Bildrand der Bildinformation bis höchstens zu einer definierten Reklassifizierungsgrenzlinie erstrecken.

Gegenstand der vorliegenden Erfindung ist außerdem eine landwirtschaftliche Spritzvorrichtung zum Ausbringen eines Mediums, insbesondere flüssigen Spritzmittels auf Pflanzen einer landwirtschaftlichen Fläche mit zumindest einer Spritzdüseneinheit zum Ausbringen des Mediums, zumindest einer optischen Erfassungseinheit zum Erfassen der Pflanzen und einer vorangehend beschriebenen Klassifizierungseinheit zum Klassifizieren der Pflanzen.

Gegenstand der vorliegenden Erfindung ist schließlich ein Computerprogramm das dazu eingerichtet ist, die Schritte eines vorangehend beschriebenen Verfahrens und/oder einer vorangehend beschriebenen Klassifizierungseinheit auszuführen, wenn das Computerprogramm auf einem Computer ausgeführt wird, sowie ein maschinenlesbares Speichermedium mit dem darauf gespeicherten Computerprogramm.

Das Verfahren ist für landwirtschaftliche Zwecke gedacht, jedoch nicht darauf beschränkt. Unter einem landwirtschaftlichen Zweck kann im Rahmen der vorliegenden Erfindung ein Zweck verstanden werden, der auf eine wirtschaftliche Kultivierung von Nutzpflanzen gerichtet ist.

Der Begriff "Pflanze" umfasst verständlicherweise auch Pflanzenteile bzw. Pflanzenbestandteile wie bspw. Pflanzenblätter, Pflanzenstängel und Pflanzenstiele.

Das Ausbringen des Mediums bzw. Spritzmittels erfolgt hierbei bevorzugt auf einer landwirtschaftlichen Fläche bzw. einer landwirtschaftlich genutzten Fläche. Hierunter können ein Feld oder eine Anbaufläche für Pflanzen oder auch eine Parzelle einer solchen Anbaufläche verstanden werden. Die landwirtschaftliche Fläche kann somit eine Ackerfläche, ein Grünland oder eine Weide sein. Die Pflanzen können beispielsweise Nutzpflanzen, deren Frucht landwirtschaftlich genutzt wird (beispielsweise als Nahrungsmittel, Futtermittel oder als Energiepflanze) sowie Beikräuter, Unkräuter und Ungräser umfassen.

Bevorzugt werden alle Schritte des Verfahrens während einer Bewegung, insbesondere einer Fahrt oder eines Fluges der landwirtschaftlichen Spritzvorrichtung über der landwirtschaftlichen Fläche durchgeführt. Somit kann im Rahmen der vorliegenden Anmeldung je nach Ausgestaltung der Spritzvorrichtung unter dem Begriff "Fahrtrichtung" auch eine "Flugrichtung" verstanden werden.

Vorteilhafterweise ist die landwirtschaftliche Spritzvorrichtung ausgebildet, das Verfahren automatisiert und/oder autonom durchzuführen, um eine schnelle, zuverlässige und effiziente Behandlung eines Feldes zu ermöglichen.

Die landwirtschaftliche Spritzvorrichtung kann insbesondere Teil einer landwirtschaftlichen Feldspritze bzw. eines Pflanzenschutzgerätes sein oder als eine landwirtschaftliche Feldspritze bzw. ein Pflanzenschutzgerät ausgebildet sein. Die landwirtschaftliche Spritzvorrichtung kann eine mobile Einheit umfassen oder auf einer mobilen Einheit angeordnet sein, wobei die mobile Einheit insbesondere als Landfahrzeug und/oder Luftfahrzeug und/oder Anhänger ausgebildet sein kann. Die mobile Einheit kann insbesondere eine landwirtschaftliche Arbeitsmaschine, bspw. eine Zugmaschine, ein Schlepper, eine selbstfahrende bzw. autonome Feldspritze oder ein selbstfahrender bzw. autonomer Roboter sein. Die landwirtschaftliche Spritzvorrichtung kann insbesondere eine gezogene Feldspritze, eine selbstfahrende Feldspritze oder eine Anbaufeldspritze sein. Die landwirtschaftliche Spritzvorrichtung kann auch an einer hydraulischen Vorrichtung einer landwirtschaftlichen Arbeitsmaschine angebaut sein. Denkbar ist auch, dass die landwirtschaftliche Spritzvorrichtung auf einer Ladefläche einer landwirtschaftlichen Arbeitsmaschine aufgebaut ist. Alternativ kann die Spritzvorrichtung an der landwirtschaftlichen Arbeitsmaschine angehängt sein. Die landwirtschaftliche Spritzvorrichtung bzw. die Feldspritze kann mindestens einen Spritzmitteltank zur Aufnahme des Spritzmittels aufweisen. Die landwirtschaftliche Spritzvorrichtung bzw. die Feldspritze kann hierbei auch eine Mischeinheit aufweisen, welche direkt auf der landwirtschaftlichen Spritzvorrichtung ein Spritzmittelkonzentrat mit Wasser zu dem auszubringenden Spritzmittel (an)mischt.

Das Medium bzw. Spritzmittel ist insbesondere eine Spritzflüssigkeit. Das Spritzmittel kann ein landwirtschaftliches Präparat bzw. Pflanzenschutzmittel (PSM), insbesondere ein Pflanzenschutzmittelkonzentrat aufweisen oder sein. Das Spritzmittel kann demnach ein Pestizid, wie bspw. ein Herbizid, Fungizid oder ein Insektizid aufweisen. Das Spritzmittel kann jedoch auch ein Düngemittel, insbesondere ein Düngemittelkonzentrat aufweisen oder sein. Das Spritzmittel kann hierbei einen Wachstumsregulator aufweisen. Das Spritzmittel kann ein granulares Wirkmittel, welches mit einer Trägerflüssigkeit vermischt wurde, aufweisen. Die Spritzflüssigkeit kann bspw. ausgebildet sein als: Flüssigkeit, Suspension, Emulsion, Lösung oder eine Kombination daraus. Die Spritzflüssigkeit ist bevorzugt als mit Wasser verdünntes Pflanzenschutzmittel oder mit Wasser verdünntes Düngemittel ausgebildet. Die Spritzflüssigkeit kann demnach bspw. eine Spritzbrühe sein.

Das Ausbringen des Mediums bzw. Spritzmittels kann insbesondere mittels einer Fördereinheit durchgeführt werden. Hierbei kann die Fördereinheit ausgebildet sein, eine Flüssigkeit und/oder ein Granulat unter Druck zu fördern bzw. zu leiten, insbesondere zu dosieren. Demnach kann die Fördereinheit bspw. jeweils ein/eine/einen oder mehrere Pumpen, Förderpumpen, Dosierpumpen, Druckspeicher, Förderschnecken, Ventile, Blenden etc. umfassen.
Die Spritzdüseneinheit weist bevorzugt jeweils mindestens eine Spritzdüse zum Ausbringen des Spritzmittels und mindestens ein Ventil zum Steuern bzw. Regeln der ausgebrachten Spritzmittelmenge auf. Demnach ist die Spritzdüseneinheit steuerbar bzw. betätigbar ausgebildet. Das Ventil kann in der Spritzdüse angeordnet bzw. integriert sein. Das Ventil kann jedoch auch der Spritzdüse vorgeschaltet, d.h. (in Strömungsrichtung des Spritzmittels) stromaufwärts der Spritzdüse angeordnet sein. Die Spritzdüseneinheit kann jedoch auch mehrere Spritzdüsen mit jeweils einem vorgeschalteten Ventil aufweisen. Die Spritzdüseneinheit kann ferner auch mehrere Spritzdüsen mit nur einem den Spritzdüsen vorgeschalteten Ventil aufweisen, so dass bei Betätigung des Ventils das Spritzmittel mittels aller Spritzdüsen der Spritzdüseneinheit ausgebracht wird. Das Ventil kann als ein pulsweitenmoduliertes Ventil (PWM-Ventil) oder als ein Proportionalventil ausgebildet sein. Die Spritzdüseneinheit kann als Teilbreite eines Düsensystems der landwirtschaftlichen Spritzvorrichtung ausgebildet sein. Die Spritzdüseneinheiten können einzeln bzw. separat und/oder in definierten Gruppen bzw. Verbänden und/oder alle gemeinsam ansteuerbar sein. Die Spritzdüsen jeder Spritzdüseneinheit können einzeln bzw. separat und/oder in definierten Gruppen bzw. Verbänden und/oder alle gemeinsam ansteuerbar sein.

Jeder Feldabschnittreihe (=Feldabschnitte entlang der Bewegungs- bzw. Fahrtrichtung) kann/können eine oder mehrere Spritzdüseneinheit(en) oder Spritzdüse(n) einer Spritzdüseneinheit zugeordnet sein. Bspw. kann jeder Feldabschnittreihe genau eine Spritzdüseneinheit bzw. Spritzdüse einer Spritzdüseneinheit oder genau zwei Spritzdüseneinheiten bzw. Spritzdüsen einer Spritzdüseneinheit zugeordnet sein, um klassifizierte Pflanzen in dieser zu behandelt.

Die optische Erfassungseinheit ist bevorzugt an der landwirtschaftlichen Spritzvorrichtung angeordnet. Die optische Erfassungseinheit kann zumindest eine multispektrale und/oder hyperspektrale und/oder Infrarot- und/oder Kamera und/oder 3D-Kamera umfassen. Die optische Erfassungseinheit kann ausgebildet sein, Bilder im NIR und/oder visuellen Bereich zu erfassen bzw. aufzunehmen. Die optische Erfassungseinheit kann eine Licht bzw. Beleuchtungseinheit aufweisen. Die optischen Erfassungseinheiten können ausgebildet sein miteinander zu kommunizieren. Bevorzugt sind die optischen Erfassungseinheiten jedoch derart ausgebildet, dass sei nicht miteinander kommunizieren. Jeder Feldabschnittreihe kann eine optische Erfassungseinheit zugeordnet sein. Es ist jedoch auch denkbar, dass eine optische Erfassungseinheit zwei oder mehrere Feldabschnittreihen erfasst. Bevorzugt weist eine optische Achse der mindestens einen optischen Erfassungseinheit einen Neigungswinkel größer 0°, bevorzugt 25° relativ zu der Vertikalen in Fahrtrichtung der Spritzvorrichtung aufweist. D.h., mit anderen Worten, dass die optische Erfassungseinheit in Fahrtrichtung nach vorne geneigt ist. Hierdurch entsteht ein trapezförmiges Sichtfeld bzw. Bildfeld.

Die Spritzdüseneinheit bzw. die Spritzdüseneinheiten und die optische Erfassungseinheit bzw. die optischen Erfassungseinheiten sind bevorzugt an einem Spritzgestänge der landwirtschaftlichen Spritzvorrichtung angeordnet.

Der Schritt des Erfassens der Feldabschnitte kann bspw. während einer Überfahrt der landwirtschaftlichen Spritzvorrichtung mit den optischen Erfassungseinheiten über dem Feld erfolgen. Hierbei werden verständlicherweise nebeneinander angeordnete Feldabschnitte im Wesentlichen gleichzeitig von den optischen Erfassungseinheiten erfasst.

Das Verfahren wird bzw. die Verfahrensschritte werden verständlicherweise wiederholt durchgeführt. Hierbei werden die Schritte des Erfassens der Feldabschnitte in Fahrtrichtung bevorzugt in einem definierten, insbesondere festen oder in einem der Geschwindigkeit der landwirtschaftlichen Spritzvorrichtung angepassten Zeitintervall durchgeführt bzw. wiederholt durchgeführt. D.h., mit anderen Worten, dass die Feldabschnitte mit einer definierten oder einer geschwindigkeitsabhängigen Bildrate bzw. Bildfrequenz (=Wiederholrate) erfasst werden.

Ein erfasster Feldabschnitt kann ein Erfassungsabschnitt bzw. ein erfasster Bildabschnitt einer optischen Erfassungseinheit sein. Der erfasste Feldabschnitt ist bevorzugt der gesamte in dem Sichtfeld der optischen Erfassungseinheit erfasste Feldabschnitt.

Die Bildinformationen repräsentieren einen jeweils erfassten Feldabschnitt. Die Bildinformationen sind bevorzugt ein Bild bzw. Abbild des jeweils erfassten Feldabschnitts. Da die Feldabschnitte bevorzugt mit einem Neigungswinkel einer optischen Achse der optischen Erfassungseinheit von größer 0°, bevorzugt 25° relativ zu der Vertikalen in Fahrtrichtung der Spritzvorrichtung erfasst werden, weisen die Bildinformationen in Bewegungsrichtung bzw. Fahrtrichtung einen hinteren Bildrand mit einer Bildbreite B(Bild,h) und einen vorderen Bildrand mit einer größeren Bildbreite B(Bild,v) auf. D.h., mit anderen Worten, dass die Bildinformation trapezförmig ausgebildet ist.

In der Bildinformation werden Pflanzen identifiziert und klassifiziert. Der Schritt des Identifizierens von Pflanzen kann ein Erfassen eines Farbanteils, insbesondere eines grünen Farbanteils und/oder eines Infrarotanteils in dem Feldabschnitt/Feldauswertebereich bzw. Bildabschnitt/Bildauswertebereich umfassen. Hierbei können mittels der optischen Erfassungseinheit, bspw. anhand eines vorbestimmten NDVI-Wertes (Normalized Differenced Vegetation Index, er wird aus Reflexionswerten im nahen infraroten und sichtbaren roten Wellenlängenbereich des Lichtspektrums gebildet) Pflanzen erfasst werden, indem Biomasse bzw. vitale Pflanzen und Pflanzenteile vom Erdboden unterschieden wird. Im Schritt des Klassifizierens werden die Pflanzen in der erhaltenen Bildinformation in zumindest eine erste Pflanzenklasse und in zumindest eine zweite Pflanzenklasse mittels eines Algorithmus klassifiziert bzw. diesen Pflanzenklassen zugewiesen, um in Abhängigkeit davon Pflanzen der zweiten Pflanzenklasse mit einem Medium, insbesondere flüssigen Spritzmittel zu behandeln. Bevorzugt werden in die erste Pflanzenklasse als Nutzpflanzen und/oder Kulturpflanzen klassifizierte Pflanzen und/oder in die zweite Pflanzenklasse als Beikräuter klassifizierte Pflanzen klassifiziert.

Hierbei umfasst der Schritt des Klassifizierens erfindungsgemäß einen Schritt des Reklassifizierens (Neuklassifizierung), in dem klassifizierte Pflanzen von der zweiten Pflanzenklasse in die erste Pflanzenklasse mittels des Algorithmus reklassifiziert werden, wenn diese sich, insbesondere vollständig in einem durch eine definierte Bildtrennlinie definierten hinteren Bildabschnitt der Bildinformation von einem seitlichen Bildrand der Bildinformation bis höchstens zu einer definierten Reklassifizierungsgrenzlinie erstrecken.

D.h., mit anderen Worten, dass zunächst in die zweite Pflanzenklasse bzw. als "Beikräuter" klassifiziert wurden, in die erste Pflanzenklasse bzw. als "Kulturpflanzen" reklassifiziert werden, wenn diese
- sich, insbesondere vollständig in einem durch eine Bildtrennlinie definierten hinteren Bildabschnitt der Bildinformation befinden, und
- an einen seitlichen Bildrand der Bildinformation angrenzen, und
- sich höchstens bis zu einer definierten Reklassifizierungsgrenzlinie der Bildinformation erstrecken.

Umgekehrt bedeutet dies, dass im Schritt des Klassifizierens in die zweite Pflanzenklasse klassifizierte Pflanzen in dieser Pflanzenklasse bleiben, wenn diese sich nicht im hinteren Bildabschnitt der Bildinformation befinden und/oder nicht an einen seitlichen Bildrand der Bildinformation angrenzen und/oder sich vom seitlichen Bildrand der Bildinformation über die Reklassifizierungsgrenzlinie erstrecken.

Bevorzugt weist die Bildinformation einen oberen Überlappungsbereich mit einer, insbesondere räumlich und/oder zeitlich vorgelagerten Vorbildinformation auf, wobei eine Position der Bildtrennlinie in der Bildinformation in Abhängigkeit von dem oberen Überlappungsbereich gewählt ist, insbesondere die Bildtrennlinie mit einem hinteren Überlappungsrand des oberen Überlappungsbereichs fluchtet. D.h., mit anderen Worten, dass die Bildrate bzw. Bildfrequenz (=Wiederholrate) der optischen Erfassungseinheit und die Fahrgeschwindigkeit derart aufeinander abgestimmt sind, dass sich die Bildinformationen mit einer (mittels dfer optischen Erfassungseinheit) zuvor und räumlich in Bewegungsrichtung weiter vorne erfassten Vorbildinformation teilweise überlappen. Bevorzugt fluchtet die Bildtrennlinie mit einem hinteren Bildrand der Vorbildinformation. Die Bildtrennlinie kann jedoch auch manuell vorgegeben werden. Die Bildtrennlinie kann insbesondere horizontal in der Bildinformation angeordnet sein.

Bevorzugt weist die Bildinformation einen seitlichen Überlappungsbereich mit zumindest einer, insbesondere seitlich angeordneten und/oder zeitgleich erfassten Nebenbildinformation aufweist, wobei eine Position der Reklassifizierungsgrenzlinie in der Bildinformation in Abhängigkeit von dem seitlichen Überlappungsbereich gewählt ist, insbesondere einen seitlichen Überlappungsrand des seitlichen Überlappungsbereichs schneidet. Alternativ oder zusätzlich kann die Reklassifizierungsgrenzlinie in Abhängigkeit von einer Kulturart und/oder einem Wachstumsstadium der Kulturpflanzen gewählt werden. Die Reklassifizierungsgrenzlinie kann jedoch auch manuell vorgegeben werden. Der seitliche Überlappungsbereich ist bevorzugt dreieckförmig ausgebildet. Die Reklassifizierungsgrenzlinie kann insbesondere vertikal in der Bildinformation angeordnet sein.

Die Bildtrennlinie, die Reklassifizierungsgrenzlinie und der seitliche Überlappungsrand sind bevorzugt derart angeordnet, dass sie einen gemeinsamen Schnittpunkt aufweisen. Somit kann sich die Position der Reklassifizierungsgrenzlinie bspw. in Abhängigkeit von dem oberen und dem seitlichen Überlappungsbereich ergeben.

Vorteilhafterweise ist beiden seitlichen Bildrändern der Bildinformation je eine Reklassifizierungsgrenzlinie zugeordnet.

Zur Realisierung der seitlichen Überlappungsbereiche sind mehrere optische Erfassungseinheiten bevorzugt quer zur Bewegungs- bzw. Fahrtrichtung derart angeordnet, dass die vorderen und hinteren Bildränder der Bildinformationen jeweils zueinander fluchten. Demnach sind die optischen Erfassungseinheiten bevorzugt derart angeordnet, dass ihre optischen Achsen entlang einer gemeinsamen Ebene quer zur Fahrtrichtung verlaufen.

Bevorzugt kann ein Schritt des Identifizierens von Pflanzenreihen in der Bildinformation unter Verwendung von klassifizierten Pflanzen der ersten Pflanzenklasse in der Bildinformation mittels eines Algorithmus vorgesehen sein, wobei im Schritt des Ausbringens das Medium bzw. Spritzmittel ferner in Abhängigkeit von identifizierten Pflanzenreihen ausgebracht werden kann. Der Schritt des Identifizierens bzw. Erkennens von Pflanzenreihen kann durchgehend bzw. permanent durchgeführt werden. Der Schritt des Identifizierens von Pflanzenreihen erfolgt bevorzugt unter Verwendung und/oder Auswertung der gesamten bzw. im Wesentlichen gesamten erhaltenen Bildinformation, d.h. über die gesamte Tiefe T(Bild).

Vorteilhafterweise kann das Identifizieren der Pflanzenreihe unter Verwendung zumindest einer der folgenden Informationen erfolgen: Farbanteil, insbesondere grüner Farbanteil der erfassten Pflanzen, Infrarotanteil der erfassten Pflanzen, Pflanzenabstand, Pflanzreihenabstand, Wachstumsstadium der Pflanzen, Geokoordinaten einer Aussaat der Pflanzen, Bewegungsrichtung der optischen Erfassungseinheit bzw. Fahrtrichtung der landwirtschaftlichen Spritzvorrichtung. Mittels dieser Informationen bzw. Eigenschaften können die Pflanzenreihen auf einfache und sichere Art und Weise identifiziert werden. Da sich Pflanzenreihen im Wesentlichen geradlinig erstrecken, kann die Identifizierung einer Pflanzenreihe auch bspw. durch Einpassung einer Geraden bzw. einer geradlinigen Pflanzenreihenmittelpunktlinie in eine Bildtrajektorie mit dem höchsten grünen Farbanteil bzw. Grünwert erfolgen. In dem Schritt des Identifizierens werden bevorzugt alle Pflanzenreihen in dem erfassten Feldabschnitt bzw. der erhaltenen Bildinformation identifiziert.

Bevorzugt ist ein Schritt des Ermittelns einer Pflanzenkennzahl für einen definierten Bildauswertebereich in der erhaltenen Bildinformation unter Verwendung von klassifizierten Pflanzen der zweiten Pflanzenklasse in dem definierten Bildauswertebereichen mittels eines Algorithmus vorgesehen.

Die Pflanzenkennzahl repräsentiert bzw. ist bevorzugt einen Bedeckungsgrad des entsprechenden Bildauswertebereichs bzw. Feldauswertebereichs von pflanzlichem Material und/oder eine Menge an pflanzlichem Material in dem Bildauswertebereich bzw. Feldauswertebereich und/oder eine Anzahl von klassifizierten Pflanzen der zweiten Pflanzenklasse in dem Bildauswertebereich bzw. Feldauswertebereich. Der Bedeckungsgrad kann über das Verhältnis von durch pflanzlichem Material bedeckter Fläche zu gesamter auszuwertenden Fläche definiert werden. Der Bedeckungsgrad für den Bildauswertebereich bzw. Feldauswertebereich ist demnach das Verhältnis der Fläche des bewachsenen Bereiches zum jeweiligen gesamten Bildauswertebereich. Dazu kann die Anzahl der Pixel in dem jeweiligen Bildauswertebereich bestimmt werden, an denen pflanzliches Material detektiert wird. Demnach kann mittels der Pflanzenkennzahl eine Maßzahl für den Befall abgeleitet werden, in Abhängigkeit derer entschieden wird, ob und ggf. wie (bspw. mit welcher Ausbringmenge) der entsprechende Feldauswertebereich bespritzt bzw. behandelt wird.

Der Schwellenwert kann manuell eingebbar, ein zuvor festgelegter und an das System übertragener, oder ein voreingestellter Wert und auf dem System fest eingestellter Wert sein. In Abhängigkeit der Kultur im Feld, des Wachstumsstadiums und des verwendeten Spritzmittel bzw. Pflanzenschutzmittels kann hierbei eine sog. Spritzregel hinterlegt sein, d.h. ein Zusammenhang zwischen einer bestimmten Pflanzenkennzahl und der Entscheidung, ob und wieviel Pflanzenschutzmittel appliziert werden soll. Als Beispiel könnte die Regel lauten: "Wenn der Bedeckungsgrad im Auswertebereich 0,5% übersteigt, dann wird auf den Feldauswertebereich appliziert".

Hierbei ist weist der Bildauswertebereich bevorzugt eine Breite B(Auswerte) von größer oder gleich der Bildbreite B(Bild,h) und kleiner der vorderen Bildbreite B(Bild,v) der Bildinformation auf. Der Bildauswertebereich weist bevorzugt eine rechteckige Form aus.

Hierbei sind die Bildauswertebereiche derart ausgebildet, dass sie im seitlichen Überlappungsbereich aneinander angrenzen und eine in Fahrtrichtung der landwirtschaftlichen Spritzvorrichtung Tiefe T(Auswerte) aufweisen, welche kleiner als die oder gleich einer Tiefe des Überlappbereiches T(Überlapp) ist.

Bevorzugt weisen die Bildauswertebereiche in Fahrtrichtung jeweils einen hinteren Auswerterand mit einer Breite B(Auswerte,h) und einen gleich großen vorderen Auswerterand mit einer Breite B(Auswerte,v) auf. Die Breite B(Auswerte) der Bildauswertebereiche kann hierbei vordefiniert bzw. manuell wählbar sein. Die Breite B(Auswerte) der Bildauswertebereiche kann jedoch auch mittels der Klassifizierungseinheit bzw. einer Steuereinheit der Klassifizierungseinheit variabel wählbar bzw. einstellbar sein, sodass Störungen kompensiert werden und die angrenzende Anordnung der Bildauswertebereiche zueinander sichergestellt werden können. Die vorderen und hinteren Auswerteränder der Bildauswertebereiche fluchten hierbei bevorzugt jeweils zueinander. Die vorderen Auswerteränder der Bildauswertebereiche können hierbei ferner mit den vorderen Bildändern der Bildinformationen fluchten. Bevorzugt ist ein gemeinsamer seitlicher Rand der Bildauswertebereiche quer zur Fahrtrichtung mittig im seitlichen Überlappungsbereich angeordnet.

Es sei angemerkt, dass in der Bildinformation weitere separate Bildauswertebereiche vorgesehen sein können, ohne den Rahmen der vorliegenden Erfindung zu verlassen. Der Bildauswertebereich gemäß der Erfindung weist einen seitlichen Auswerterand auf, der im seitlichen Überlappungsbereich angeordnet ist. In der Bildinformation kann ein weiterer Bildauswertebereich vorgesehen sein, der einen seitlichen Auswerterand in einem seitlichen Überlappungsbereich an einem gegenüberliegenden seitlichen Bildrand der Bildinformationen aufweist. Zusätzlich kann die Bildinformation einen oder mehrere mittig angeordnete Bildauswertbereiche aufweisen, die sich nicht bis zu einem seitlichen Überlappungsbereich erstrecken. Die Anzahl der Bildauswertebereiche pro Bildinformation ist abhängig vom Spritzdüsenabstand und der Breite der Bildinformation. Jeder Bildauswertebereich kann jeweils einer Spritzdüseneinheit mit einer oder mehreren Spritzdüsen zugeordnet sein. Bspw. wären bei einer Bildinformationsbreite von 1.5m und 25cm Spritzdüsenabstand 6 Bildauswertebereiche pro Kamera vorgesehen.

Somit sind die Bildauswertebereiche die Bereiche der Bildinformationen, in denen die Pflanzenkennzahlen ermittelt und ausgewertet werden, um in Abhängigkeit davon, das Medium bzw. Spritzmittel auszubringen. Die Bildauswertebereiche repräsentieren hierbei einen entsprechenden Feldauswertebereich der erfassten Feldabschnitte, sodass im Schritt des Ausbringens das Spritzmittel bevorzugt auf den oder die entsprechenden Feldauswertebereich(e) ausgebracht wird.

Im Schritt des Ausbringens wird bei einer positiven "Spritzentscheidung" das Spritzmittel in Abhängigkeit von den ermittelten Pflanzenkennzahlen, insbesondere bei Erreichung und/oder Unterschreitung und/oder Überschreitung eines definierten Schwellenwertes für die Pflanzenkennzahl mittels der Spritzdüseneinheit der landwirtschaftlichen Spritzvorrichtung ausgebracht. Das Spritzmittel wird bevorzugt mit einer definierten Mindestmenge pro Fläche ausgebracht. Hierbei wird das Spritzmittel bevorzugt auf den gesamten Feldauswertebereich ausgebracht. Die Feldauswertebereiche, auf denen Spritzmittel mit der definierten Mindestmenge pro Fläche ausgebracht wird, werden nachfolgend auch bespritzte bzw. behandelte Feldauswertebereiche bezeichnet.

Die Klassifizierungseinheit umfasst einen Algorithmus zum Klassifizieren und Reklassifizieren der Pflanzen in der Bildinformation. Die Klassifizierungseinheit kann eine Recheneinheit oder eine Vielzahl von Recheneinheiten zum Verarbeiten von Signalen oder Daten, zumindest eine Speichereinheit zum Speichern von Signalen oder Daten, zumindest eine Kommunikationsschnittstelle zum Einlesen von Daten, insbesondere zum Empfangen von Bildinformationen und eine Steuereinheit zum Ausgeben von Daten, insbesondere Steuersignalen an eine Einheit, insbesondere einen Aktor umfassen. Jeder optischen Erfassungseinheit kann eine Klassifizierungseinheit zugeordnet sein bzw. jede optische Erfassungseinheit kann eine eigene Klassifizierungseinheit aufweisen. Die Klassifizierungseinheit ist bzw. die Klassifizierungseinheiten sind zur Bildverarbeitung ausgebildet bzw. eingerichtet, sodass sie Berechnungsschritte bzw. Bildverarbeitungsschritte zur Durchführung des erfindungsgemäßen Verfahrens ausführen kann. Demnach weist jede Klassifizierungseinheit eine entsprechende Bildverarbeitungssoftware auf. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten bspw. elektrisch oder optisch aus einer entsprechenden Datenübertragungsleitung einlesen oder in eine entsprechende Datenübertragungsleitung ausgeben kann.

Demnach kann das erfindungsgemäße Verfahren beispielsweise in Software oder Hardware oder in einer Mischform aus Software und Hardware in der Klassifizierungseinheit bzw. einem Steuergerät implementiert sein.

Die Klassifizierungseinheit kann vollständig oder teilweise an der landwirtschaftlichen Spritzvorrichtung angeordnet bzw. in diese integriert sein. Die Klassifizierungseinheit kann jedoch auch vollständig oder teilweise extern, bspw. in einer Cloud integriert sein.

Die Definition der Bildtrennlinie und/oder der Reklassifizierungsgrenzlinie und/oder des Bildauswertebereichs kann entweder innerhalb einer nachgelagerten Bildverarbeitungssoftware der Klassifizierungseinheit oder, wenn durch die optische Erfassungseinheit bzw. Kamera unterstützt, direkt als ROI-Definition (region of interest) auf Ebene des Imagerchips der optischen Erfassungseinheit bzw. Kamera erfolgen.

Das erfindungsgemäße Verfahren ermöglicht eine effiziente und genaue Klassifizierung, insbesondere von am Bildrand abgeschnittenen bzw. nur teilweise erfassten Pflanzen, welche vorteilhafterweise mittels autarker optischer Erfassungseinheiten bzw. Kameras durchführbar ist. Hierbei macht sich das Verfahren die Tatsache zu Nutze, dass bei trapezförmigen Bildern Pflanzen im vorderen Bildabschnitt größtenteils ganz zu sehen sind und somit korrekt klassifiziert werden können, wohin gegen dieselben Pflanzen bei darauffolgenden Bildern nach einer Vorwärtsbewegung sich im hinteren Bildabschnitt befinden und dadurch am seitlichen Bildrand teilweise abgeschnitten werden, wodurch das Risiko der Fehlklassifizierung wächst. Somit werden diese Pflanzen im hinteren Bildabschnitt zwar als Nutzpflanze klassifiziert und daher in dem aktuellen Bild nie als Beikraut erkannt werden (auch wenn es evtl. welche sind), doch durch die Überlappung der Bilder in Fahrtrichtung befanden sich diese Pflanzen in dem vorherigen Bild in dem vorderen Bildabschnitt, der normal ausgewertet wurde, wodurch auch eine korrekte Bildauswertung für eine "Spritzentscheidung" erfolgt ist.

Die erhöhte Klassifizierungsgüte führt wiederum zu einer präziseren Applikation von bspw. Pflanzenschutzmittel, da ein Applikationsbedarf aufgrund ein korrekten Klassifizierung der Pflanzen erfolgen kann. Ferner ermöglicht das erfindungsgemäße Verfahren aufgrund der geringen benötigten Laufzeiten und Rechenleistung eine schnelle und effiziente Arbeitsgeschwindigkeit, insbesondere bei der Behandlung einer landwirtschaftlichen Fläche, bspw. mittels einer Feldspritze.

### Zeichnungen

Die Erfindung wird nachstehend anhand der beigefügten Zeichnungen beispielhaft näher erläutert. Es zeigen:
- Fig. 1: eine schematische Darstellung einer erfindungsgemäßen landwirtschaftlichen Spritzvorrichtung;
- Fig. 2: eine schematische Darstellung einer grundsätzlichen geometrischen Anordnung von optischer Erfassungseinheit und Spritzdüseneinheit zueinander;
- Fig. 3: eine Bildinformation mit klassifizierten Pflanzen gemäß dem Stand der Technik;
- Fig. 4: eine Bildinformation mit klassifizierten Pflanzen gemäß dem erfindungsgemäßen Verfahren;
- Fig. 5: eine Anordnung von sich überlappenden Bildinformationen; und
- Fig. 6: ein Ablaufdiagramm eines Verfahrens gemäß einem Ausführungsbeispiel.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung der Elemente verzichtet wird.

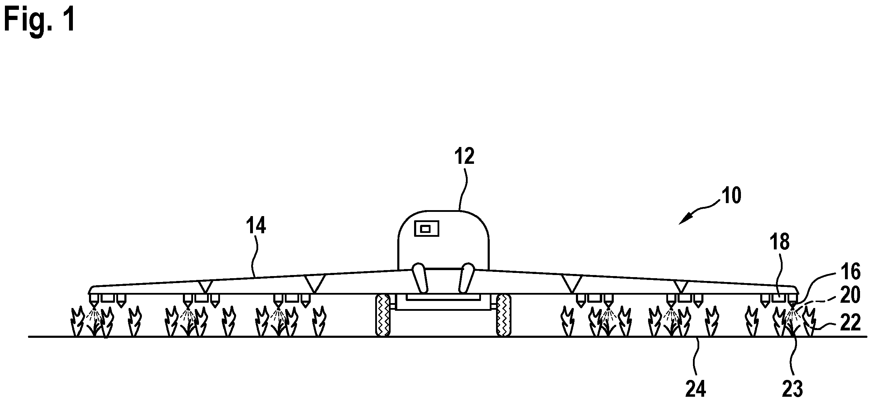

In Fig. 1 ist eine schematische Darstellung einer landwirtschaftlichen Spritzvorrichtung dargestellt, welche in ihrer Gesamtheit mit dem Bezugszeichen 10 versehen ist.

Die landwirtschaftliche Spritzvorrichtung 10 ist als Feldspritze 10 ausgebildet. Die Feldspritze 10 ist an einem mobilen Landfahrzeug 12 angeordnet, welches als Zugmaschine 12 bzw. Traktor 12 ausgebildet ist.

Die landwirtschaftliche Spritzvorrichtung 10 weist ein Spritzgestänge 14 auf. An dem Spritzgestänge 14 sind Spritzdüseneinheiten 16 und optische Erfassungseinheiten 18 angeordnet. Die Spritzdüseneinheiten 16 sind ausgebildet ein Spritzmittel 20 auf Pflanzen 22 bzw. Beikräuter 23 einer landwirtschaftlichen Fläche 24 auszubringen. Die optische Erfassungseinheiten 18 sind als optische Kameras 18 ausgebildet. Die optischen Kameras 18 umfassen jeweils eine Filtereinheit, um einen Farbanteil wie beispielsweise den grünen Farbanteil einer erhaltenen bzw. erfassten Bildinformation bzw. eines erfassten Bildes zu extrahieren, um Pflanzen 22 bzw. Beikräuter 23 zu erfassen.

Die landwirtschaftliche Spritzvorrichtung 10 weist ferner eine (nicht gezeigte) Fördereinheit auf, mittels derer die Ausbringmenge bzw. eine Wirkmittelmenge in dem auszubringenden Spritzmittel 20 einstellbar bzw. variierbar ist.

Die landwirtschaftliche Spritzvorrichtung 10 weist außerdem (nicht gezeigte) Klassifizierungseinheiten auf, welche mit den optischen Kameras 18 verbunden sind, um Informationen von diesen zu empfangen. Hierbei ist jeder optischen Kamera 18 jeweils eine eigene Klassifizierungseinheit zugeordnet. Die Klassifizierungseinheiten weisen eine Recheneinheit auf, welche ausgebildet ist, Berechnungsschritte bzw. Bildverarbeitungsschritte zur Durchführung des erfindungsgemäßen Verfahrens auszuführen. Die Klassifizierungseinheiten sind ferner ausgebildet, ein Steuersignal derart auszugeben, dass das Spritzmittel 20 in Abhängigkeit von der ermittelten Pflanzenkennzahl mittels der zugehörigen Spritzdüseneinheiten 16 ausgebracht wird.

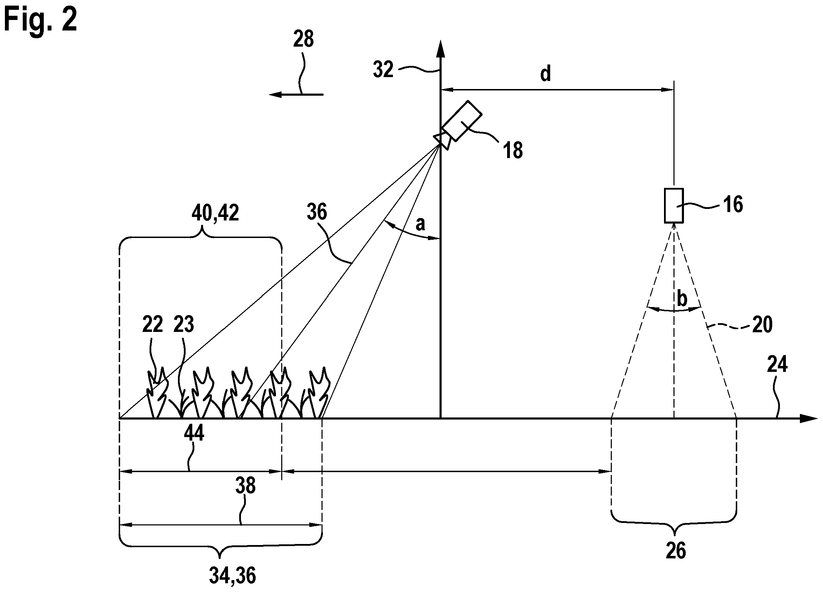

Fig. 2 zeigt eine grundsätzliche geometrische Anordnung einer Spritzdüseneinheit 16, welche im Fall einer positiven Spritzentscheidung das Spritzmittel 20 auf einen Spritzbereich 26 ausbringt, und einer geneigten optischen Erfassungseinheit 18 bzw. Kamera 18 auf der landwirtschaftlichen Spritzvorrichtung 10. Der Neigungswinkel a ist hierbei der Winkel in Fahrtrichtung 28 der Spritzvorrichtung 10 zwischen einer optischen Achse 30 der Kamera 18 und einer Vertikalen 32.

Wie aus Fig. 2 ferner ersichtlich, wird mittels der optischen Erfassungseinheit 18 ein Feldabschnitt 34 der landwirtschaftlichen Fläche 24 erfasst, um eine Bildinformation 36 von dem Feldabschnitt 34 mit einer in Fahrtrichtung 28 Tiefe T(Bild) 38 zu erhalten. Anschließend werden die Pflanzen 22, 23 in einem Bildauswertebereich 40 der erhaltenen Bildinformation 36 identifiziert und klassifiziert, wobei der Bildauswertebereich 40 einen entsprechenden Feldauswertebereich 42 des erfassten Feldabschnitts 34 mit einer in Fahrtrichtung 28 der Spritzvorrichtung 10 Tiefe T(Auswerte) 44 repräsentiert. In Abhängigkeit von einer ermittelten Pflanzenkennzahl für den Bildauswertebereich 40 wird dann mittels der Spritzdüseneinheit 16 das Spritzmittel 20 auf den Feldauswertebereich 42 des erfassten Feldabschnitts 34 flächig ausgebracht.

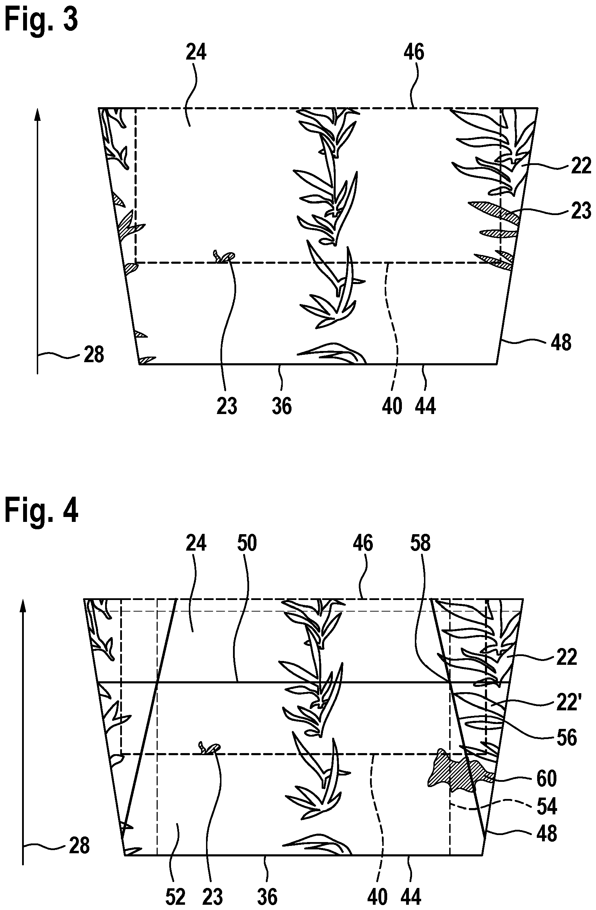

In Fig. 3 und 4 ist jeweils eine Bildinformation 36 dargestellt, welche von jeweils einer geneigten optischen Erfassungseinheit 18 gemäß Fig. 2 erhalten wurde. Die Bildinformation 36 weist einen in Fahrtrichtung 28 hinteren Bildrand 44 mit einer Bildbreite B(Bild,h) und einen vorderen Bildrand 46 mit einer größeren Bildbreite B(Bild,v) auf.

In der in Fig. 3 gezeigten Bildinformation 36 wurden die Pflanzen 22, 23 gemäß dem Stand der Technik in Kulturpflanzen 22 und Beikräutern 23 klassifiziert. Hieraus ist ersichtlich, dass Kulturpflanzen, welche am an den seitlichen Bildrändern 48 abgeschnitten, d.h. nur teilweise erfasst wurden, fälschlicherweise als Beikräuter 23 klassifiziert sind. Dies würde zu einer falschen Ermittlung einer Pflanzenkennzahl für den Bildauswertebereich 40, d.h. eine falsche Auswertung eines Bedeckungsgrades des Bildauswertebereiches 40 von Beikräutern 23 und somit einer ungenauen Applikationsstrategie führen.

Im Gegensatz dazu wurden in der Bildinformation 36 aus Fig. 4 die Pflanzen 22, 23 gemäß dem erfindungsgemäßen Verfahren klassifiziert, d.h. es wurde ein Schritt des Reklassifizierens durchgeführt. Hierbei wurden klassifizierte Beikräuter 23 gemäß Fig. 3, welche sich in einem durch eine definierte Bildtrennlinie 50 definierten hinteren Bildabschnitt 52 der Bildinformation 36 von dem seitlichen Bildrand 48 bis höchstens zu einer (dem jeweiligen Bildrand 48 zugeordneten) definierten Reklassifizierungsgrenzlinie 54 erstrecken, als Kulturpflanzen 22' reklassifiziert.

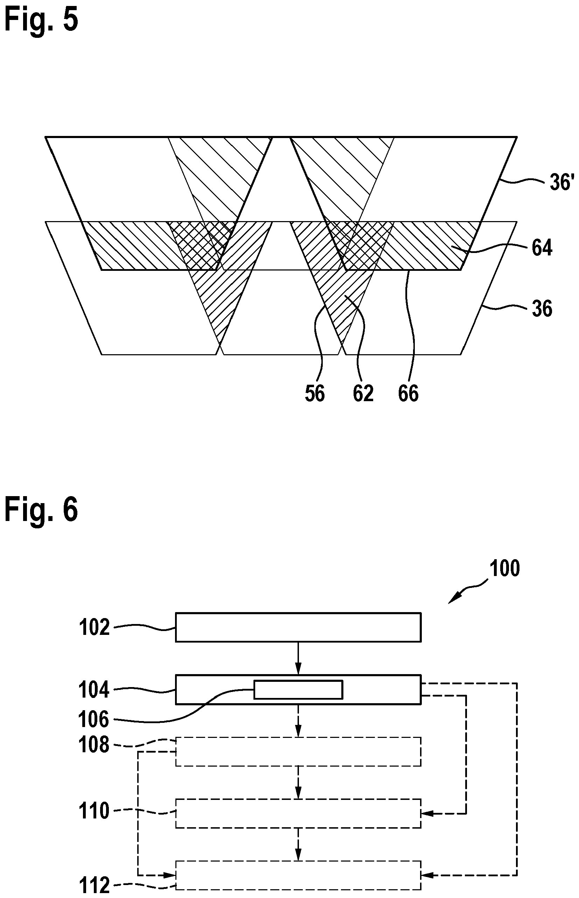

Hierbei sind die Bildtrennlinie 50 horizontal und die Reklassifizierungsgrenzlinien 54 vertikal in der Bildinformation 36 angeordnet. Die Bildtrennlinie 50 und die Reklassifizierungsgrenzlinien 54 sind derart in der Bildinformation 36 angeordnet, dass die Bildtrennlinie 50, jede Reklassifizierungsgrenzlinie 54 und ein seitlicher Überlappungsrand 56 einer seitlich angeordneten und zeitgleich erfassten Nebenbildinformation, welche nachfolgend in Fig. 5 näher erläutert wird, einen gemeinsamen Schnittpunkt 58 aufweisen.

Zur Verdeutlichung ist in Fig. 4 noch ein klassifiziertes Beikraut 60 dargestellt, welches sich zwar im hinteren Bildabschnitt 52 der Bildinformation 36 befindet und auch an den seitlichen Bildrand 48 der Bildinformation 36 angrenzt, jedoch sich über die Reklassifizierungsgrenzlinie 54 erstreckt. Daher erfolgt für dieses Beikraut 60 keine Reklassifizierung.

Fig. 5 zeigt noch eine Anordnung von sich überlappenden Bildinformationen 36, 36`. Die Bildinformationen 36 sind hierbei seitlich nebeneinander angeordnet und wurden zeitgleich mittels jeweils einer Kamera 18 erfasst. Die Bildinformationen 36 weisen aufgrund ihrer Anordnung zueinander bzw. der entsprechenden Anordnung der jeweiligen Kameras 18 einen seitlichen Überlappungsbereich 62 mit einem vorangehend erwähnten seitlicher Überlappungsrand 56 auf.

Die Bildinformationen 36' sind analog dazu angeordnet, wobei diese räumlich und zeitlich vor den Bildinformationen 36 erfasst wurden. Die Bildinformationen 36 weisen mit den Bildinformationen 36' einen oberen Überlappungsbereich 64 mit einem hinteren Überlappungsrand 66 auf. Die Position der in Fig. gezeigten Bildtrennlinie 50 ist hierbei derart gewählt, dass diese mit dem hinteren Überlappungsrand 66 fluchtet.

Fig. 6 zeigt ein Ablaufdiagramm eines Verfahrens 100 zum Klassifizieren von Pflanzen 22, 23, 60, insbesondere für landwirtschaftliche Zwecke. Das Verfahren 100 umfasst einen Schritt des Erfassens 102 eines Feldabschnitts 34 mit Pflanzen 22, 23, 60 mittels einer gegenüber dem Feldabschnitt 34 geneigten optischen Erfassungseinheit 18, um eine Bildinformation 36, welche einen hinteren Bildrand 44 mit einer Bildbreite B(Bild,h) und einen vorderen Bildrand 46 mit einer größeren Bildbreite B(Bild,v) aufweist, zu erhalten. Das Verfahren 100 umfasst ferner einen Schritt des Klassifizierens 104 der Pflanzen 22, 23, 60 in der erhaltenen Bildinformation 36) in zumindest eine erste Pflanzenklasse und in zumindest eine zweite Pflanzenklasse mittels eines Algorithmus, um in Abhängigkeit davon Pflanzen 23, 60 der zweiten Pflanzenklasse mit einem Medium, insbesondere flüssigen Spritzmittel 20 zu behandeln. Das Verfahren 100 umfasst außerdem einen Schritt des Reklassifizierens 106 umfasst, in dem klassifizierte Pflanzen 22' von der zweiten Pflanzenklasse in die erste Pflanzenklasse mittels des Algorithmus reklassifiziert werden, wenn diese sich in einem durch eine definierte Bildtrennlinie 50 definierten hinteren Bildabschnitt 52 der Bildinformation 36 von einem seitlichen Bildrand 48 der Bildinformation 36 bis höchstens zu einer definierten Reklassifizierungsgrenzlinie 54 erstrecken.

Das Verfahren 100 umfasst ferner einen optionalen Schritt des Identifizierens 108 von Pflanzenreihen in der Bildinformation 36 unter Verwendung von klassifizierten Pflanzen 22 der ersten Pflanzenklasse in der Bildinformation 36 mittels eines Algorithmus. Das Verfahren 100 umfasst außerdem einen weiteren optionalen Schritt des Ermittelns 110 einer Pflanzenkennzahl für einen definierten Bildauswertebereich 40 in der erhaltenen Bildinformation 36 unter Verwendung von klassifizierten Pflanzen 23, 60 der zweiten Pflanzenklasse in dem definierten Bildauswertebereichen mittels eines Algorithmus. Das Verfahren 100 umfasst ferner einen weiteren optionalen Schritt des Ausbringens 112 des Mediums 20 auf die klassifizierten Pflanzen 23, 60 der zweiten Pflanzenklasse in Abhängigkeit von der ermittelten Pflanzenkennzahl mittels einer Spritzdüseneinheit 16, insbesondere einer landwirtschaftlichen Spritzvorrichtung 10.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (100) zum Klassifizieren von Pflanzen (22, 23, 60), insbesondere für landwirtschaftliche Zwecke, mit folgenden Schritten:
- Erfassen (102) eines Feldabschnitts (34) mit Pflanzen (22, 23, 60) mittels einer gegenüber dem Feldabschnitt (34) geneigten optischen Erfassungseinheit (18), um eine Bildinformation (36), welche einen hinteren Bildrand (44) mit einer Bildbreite B(Bild,h) und einen vorderen Bildrand (46) mit einer größeren Bildbreite B(Bild,v) aufweist, zu erhalten;
- Klassifizieren (104) der Pflanzen (22, 23, 60) in der erhaltenen Bildinformation (36) in zumindest eine erste Pflanzenklasse und in zumindest eine zweite Pflanzenklasse mittels eines Algorithmus, um in Abhängigkeit davon Pflanzen (23, 60) der zweiten Pflanzenklasse mit einem Medium, insbesondere flüssigen Spritzmittel (20) zu behandeln,
**dadurch gekennzeichnet, dass**
- der Schritt des Klassifizierens (104) einen Schritt des Reklassifizierens (106) umfasst, in dem klassifizierte Pflanzen (22') von der zweiten Pflanzenklasse in die erste Pflanzenklasse mittels des Algorithmus reklassifiziert werden, wenn diese sich in einem durch eine definierte Bildtrennlinie (50) definierten hinteren Bildabschnitt (52) der Bildinformation (36) von einem seitlichen Bildrand (48) der Bildinformation (36) bis höchstens zu einer definierten Reklassifizierungsgrenzlinie (54) erstrecken.

2. Verfahren (100) nach Anspruch 1, **dadurch gekennzeichnet, dass** die Bildinformation (36) einen oberen Überlappungsbereich (64) mit einer, insbesondere räumlich und/oder zeitlich vorgelagerten Vorbildinformation (36') aufweist, wobei eine Position der Bildtrennlinie (50) in der Bildinformation (36) in Abhängigkeit von dem oberen Überlappungsbereich (64) gewählt ist, insbesondere die Bildtrennlinie (50) mit einem hinteren Überlappungsrand (66) des oberen Überlappungsbereichs (64) fluchtet.

3. Verfahren (100) nach Anspruch 1 oder 2, **dadurch gekennzeichnet, dass** die Bildinformation (36) einen seitlichen Überlappungsbereich (62) mit zumindest einer, insbesondere seitlich angeordneten und/oder zeitgleich erfassten Nebenbildinformation (36) aufweist, wobei eine Position der Reklassifizierungsgrenzlinie (54) in der Bildinformation (36) in Abhängigkeit von dem seitlichen Überlappungsbereich (62) gewählt ist, insbesondere einen seitlichen Überlappungsrand (56) des seitlichen Überlappungsbereichs (62) schneidet.

4. Verfahren (100) nach Anspruch 3, **dadurch gekennzeichnet, dass** die Bildtrennlinie (50), die Reklassifizierungsgrenzlinie (54) und der seitliche Überlappungsrand (56) einen gemeinsamen Schnittpunkt (58) aufweisen.

5. Verfahren (100) nach einem der vorhergehenden Ansprüche, **dadurch gekennzeichnet, dass**
- die Bildtrennlinie (50) horizontal und/oder
- die Reklassifizierungsgrenzlinie (54) oder Reklassifizierungsgrenzlinien (54) vertikal
in der Bildinformation (36) angeordnet ist/sind.

6. Verfahren (100) nach einem der vorhergehenden Ansprüche, **dadurch gekennzeichnet, dass** beiden seitlichen Bildrändern (48) der Bildinformation (36) je eine Reklassifizierungsgrenzlinie (54) zugeordnet ist.

7. Verfahren (100) nach einem der vorhergehenden Ansprüche, **dadurch gekennzeichnet, dass** im Schritt des Klassifizierens (104) in die zweite Pflanzenklasse klassifizierte Pflanzen (60) in dieser Pflanzenklasse bleiben, wenn diese sich nicht in dem hinteren Bildabschnitt (52) der Bildinformation (36) befinden und/oder nicht an einen seitlichen Bildrand (48) der Bildinformation (36) angrenzen und/oder sich vom seitlichen Bildrand (48) der Bildinformation (36) über die Reklassifizierungsgrenzlinie (54) erstrecken.

8. Verfahren (100) nach einem der vorhergehenden Ansprüche, **gekennzeichnet durch** einen Schritt des Identifizierens (108) von Pflanzenreihen in der Bildinformation (36) unter Verwendung von klassifizierten Pflanzen (22) der ersten Pflanzenklasse in der Bildinformation (36) mittels eines Algorithmus.

9. Verfahren (100) nach einem der vorhergehenden Ansprüche, **gekennzeichnet durch** einen Schritt des Ermittelns (110) einer Pflanzenkennzahl für einen definierten Bildauswertebereich (40) in der erhaltenen Bildinformation (36) unter Verwendung von klassifizierten Pflanzen (23, 60) der zweiten Pflanzenklasse in dem definierten Bildauswertebereichen (40) mittels eines Algorithmus.

10. Verfahren (100) nach Anspruch 9, **gekennzeichnet durch** der Bildauswertebereich (40) eine Breite B(Auswerte) von größer oder gleich der Bildbreite B(Bild,h) und kleiner der vorderen Bildbreite B(Bild,v) der Bildinformation (36) aufweist.

11. Verfahren (100) nach Anspruch 9 oder 10, **dadurch gekennzeichnet, dass** die Pflanzenkennzahl einen Bedeckungsgrad des Bildauswertebereichs (40) von pflanzlichem Material und/oder eine Menge an pflanzlichem Material in dem Bildauswertebereich (40) und/oder eine Anzahl von klassifizierten Pflanzen (23, 60) der zweiten Pflanzenklasse in dem Bildauswertebereich (40) repräsentiert.

12. Verfahren (100) nach einem der Ansprüche 9 bis 11, **gekennzeichnet durch** einen Schritt des Ausbringens (112) des Mediums (20) auf die klassifizierten Pflanzen (23, 60) der zweiten Pflanzenklasse in Abhängigkeit von der ermittelten Pflanzenkennzahl mittels einer Spritzdüseneinheit (16), insbesondere einer landwirtschaftlichen Spritzvorrichtung (10).

13. Verfahren (100) nach einem der vorhergehenden Ansprüche, **dadurch gekennzeichnet, dass** in die erste Pflanzenklasse Nutzpflanzen (22, 22') und/oder Kulturpflanzen (22, 22') und/oder in die zweite Pflanzenklasse Beikräuter (23, 60) klassifiziert werden.

14. Klassifizierungseinheit die dazu eingerichtet ist, folgende Schritte durchzuführen:
- Klassifizieren (104) von Pflanzen (22, 23, 60) in einer erhaltenen Bildinformation (36) in zumindest eine erste Pflanzenklasse und in zumindest eine zweite Pflanzenklasse mittels eines Algorithmus; und
- Reklassifizieren (106) von klassifizierten Pflanzen (22') aus der zweiten Pflanzenklasse in die erste Pflanzenklasse mittels des Algorithmus, wenn diese sich in einem durch eine definierte Bildtrennlinie (50) definierten hinteren Bildabschnitt (52) der Bildinformation (36) von einem seitlichen Bildrand (48) der Bildinformation (36) bis höchstens zu einer definierten Reklassifizierungsgrenzlinie (54) erstrecken.

15. Landwirtschaftliche Spritzvorrichtung (10) zum Ausbringen eines Mediums (20), insbesondere flüssigen Spritzmittels (20) auf Pflanzen (23, 60) einer landwirtschaftlichen Fläche (24) mit zumindest einer Spritzdüseneinheit (16) zum Ausbringen des Mediums (20), zumindest einer optischen Erfassungseinheit (18) zum Erfassen der Pflanzen (22, 23, 60) und einer Klassifizierungseinheit zum Klassifizieren der Pflanzen (22, 23, 60) gemäß Anspruch 14.

16. Computerprogramm das dazu eingerichtet ist, die Schritte eines Verfahrens nach einem der Ansprüche 1 bis 13 und/oder einer Klassifizierungseinheit nach Anspruch 14 auszuführen oder zu steuern, wenn das Computerprogramm auf einem Computer ausgeführt wird.

17. Maschinenlesbares Speichermedium mit dem darauf gespeicherten Computerprogramm nach Anspruch 16.

## Claims

1. Method (100) for classifying plants (22, 23, 60), in particular for agricultural purposes, comprising the following steps:
- capturing (102) a field section (34) with plants (22, 23, 60) by means of an optical capture unit (18) inclined relative to the field section (34), in order to obtain image information (36) comprising a rear image edge (44) with an image width B(image,h) and a front image edge (46) with a larger image width B(image,v);
- classifying (104) the plants (22, 23, 60) in the obtained image information (36) into at least one first plant class and into at least one second plant class by means of an algorithm, in order, in a manner dependent thereon, to treat plants (23, 60) of the second plant class with a medium, in particular liquid spray (20),
**characterized in that**
- the step of classifying (104) comprises a step of reclassifying (106), in which classified plants (22') are reclassified from the second plant class into the first plant class by means of the algorithm if they extend, in a rear image section (52) of the image information (36) defined by a defined image separation line (50), from a lateral image edge (48) of the image information (36) to at most a defined reclassification boundary line (54).

2. Method (100) according to Claim 1, **characterized in that** the image information (36) has an upper overlap region (64) with in particular spatially and/or temporally upstream model information (36'), wherein a position of the image separation line (50) in the image information (36) is selected depending on the upper overlap region (64), in particular the image separation line (50) is aligned with a rear overlap edge (66) of the upper overlap region (64).

3. Method (100) according to Claim 1 or 2, **characterized in that** the image information (36) has a lateral overlap region (62) with at least one item of in particular laterally arranged and/or simultaneously captured secondary image information (36), wherein a position of the reclassification boundary line (54) in the image information (36) is selected depending on the lateral overlap region (62), in particular intersects a lateral overlap edge (56) of the lateral overlap region (62).

4. Method (100) according to Claim 3, **characterized in that** the image separation line (50), the reclassification boundary line (54) and the lateral overlap edge (56) have a common intersection point (58).

5. Method (100) according to any of the preceding claims, **characterized in that**
- the image separation line (50) is arranged horizontally and/or
- the reclassification boundary line (54) or reclassification boundary lines (54) is/are arranged vertically
in the image information (36).

6. Method (100) according to any of the preceding claims, **characterized in that** both lateral image edges (48) of the image information (36) are each assigned a reclassification boundary line (54).

7. Method (100) according to any of the preceding claims, **characterized in that** in the step of classifying (104), plants (60) classified into the second plant class remain in this plant class if they are not located in the rear image section (52) of the image information (36) and/or are not adjacent to a lateral image edge (48) of the image information (36) and/or extend from the lateral image edge (48) of the image information (36) over the reclassification boundary line (54).

8. Method (100) according to any of the preceding claims, **characterized by** a step of identifying (108) plant rows in the image information (36) using classified plants (22) of the first plant class in the image information (36) by means of an algorithm.

9. Method (100) according to any of the preceding claims, **characterized by** a step of determining (110) a plant metric for a defined image evaluation region (40) in the obtained image information (36) using classified plants (23, 60) of the second plant class in the defined image evaluation regions (40) by means of an algorithm.

10. Method (100) according to Claim 9, **characterized in that** the image evaluation region (40) has a width B(evaluation) of greater than or equal to the image width B(image,h) and less than the front image width B(image,v) of the image information (36).

11. Method (100) according to Claim 9 or 10, **characterized in that** the plant metric represents a degree of coverage of the image evaluation region (40) with plant material and/or an amount of plant material in the image evaluation region (40) and/or a number of classified plants (23, 60) of the second plant class in the image evaluation region (40).

12. Method (100) according to any of Claims 9 to 11, **characterized by** a step of applying (112) the medium (20) to the classified plants (23, 60) of the second plant class depending on the determined plant metric by means of a spray nozzle unit (16), in particular of an agricultural spraying apparatus (10).

13. Method (100) according to any of the preceding claims, **characterized in that** useful plants (22, 22') and/or crop plants (22, 22') are classified into the first plant class and/or weeds (23, 60) are classified into the second plant class.

14. Classification unit configured to carry out the following steps:
- classifying (104) plants (22, 23, 60) in obtained image information (36) into at least one first plant class and into at least one second plant class by means of an algorithm; and
- reclassifying (106) classified plants (22') from the second plant class into the first plant class by means of the algorithm if they extend, in a rear image section (52) of the image information (36) defined by a defined image separation line (50), from a lateral image edge (48) of the image information (36) to at most a defined reclassification boundary line (54).

15. Agricultural spraying apparatus (10) for applying a medium (20), in particular liquid spray (20), on plants (23, 60) of an agricultural area (24) comprising at least one spray nozzle unit (16) for applying the medium (20), at least one optical capture unit (18) for capturing the plants (22, 23, 60) and a classification unit for classifying the plants (22, 23, 60) according to Claim 14.

16. Computer program configured to execute or to control the steps of a method according to any of Claims 1 to 13 and/or a classification unit according to Claim 14 when the computer program is executed on a computer.

17. Machine-readable storage medium with the computer program according to Claim 16 stored thereon.

## Revendications

1. Procédé (100) permettant de classifier des plantes (22, 23, 60), en particulier à des fins agricoles, comprenant les étapes suivantes consistant à :
- détecter (102) une partie de champ (34) avec des plantes (22, 23, 60) au moyen d'une unité de détection optique (18) inclinée par rapport à la partie de champ (34) pour obtenir une information d'image (36) qui présente une bordure d'image arrière (44) d'une largeur d'image B(Bild,h) et une bordure d'image avant (46) d'une plus grande largeur d'image B(Bild,v) ;
- classifier (104) les plantes (22, 23, 60) dans l'information d'image (36) obtenue dans au moins une première classe de plantes et dans au moins une deuxième classe de plantes au moyen d'un algorithme afin de traiter en fonction de cela des plantes (23, 60) de la deuxième classe de plantes avec un milieu, en particulier un agent de pulvérisation (20) liquide,
**caractérisé en ce que**
- l'étape de classification (104) comprend une étape de reclassification (106) dans laquelle des plantes (22') classifiées de la deuxième classe de plantes sont reclassifiées dans la première classe de plantes au moyen de l'algorithme si celles-ci s'étendent dans une partie d'image arrière (52) de l'information d'image (36), définie par une ligne de séparation d'image (50) définie, d'une bordure d'image latérale (48) de l'information d'image (36) au plus jusqu'à une ligne de limite de reclassification (54) définie.

2. Procédé (100) selon la revendication 1, **caractérisé en ce que** l'information d'image (36) présente une zone de chevauchement supérieure (64) comprenant une information d'image préliminaire (36') placée en amont, en particulier dans l'espace et/ou dans le temps, dans lequel une position de la ligne de séparation d'image (50) dans l'information d'image (36) est choisie en fonction de la zone de chevauchement supérieure (64), la ligne de séparation d'image (50) étant en particulier alignée sur une bordure de chevauchement arrière (66) de la zone de chevauchement supérieure (64).

3. Procédé (100) selon la revendication 1 ou 2, **caractérisé en ce que** l'information d'image (36) présente une zone de chevauchement latérale (62) comprenant au moins une information d'image secondaire (36) disposée en particulier latéralement et/ou détectée en même temps, dans lequel une position de la ligne de limite de reclassification (54) dans l'information d'image (36) est choisie en fonction de la zone de chevauchement latérale (62), intersectant en particulier une bordure de chevauchement (56) de la zone de chevauchement latérale (62).

4. Procédé (100) selon la revendication 3, **caractérisé en ce que** la ligne de séparation d'image (50), la ligne de limite de reclassification (54) et la bordure de chevauchement latérale (56) présentent un point d'intersection commun (58).

5. Procédé (100), selon l'une quelconque des revendications précédentes, **caractérisé en ce que**
- la ligne de séparation d'image (50) est disposée horizontalement, et/ou
- la ligne de limite de reclassification (54) ou les lignes de limite de reclassification (54) est/sont disposée(s) verticalement
dans l'information d'image (36).

6. Procédé (100) selon l'une quelconque des revendications précédentes, **caractérisé en ce que** respectivement une ligne de limite de reclassification (54) est attribuée aux deux bordures d'image (48) latérales de l'information d'image (36).

7. Procédé (100), selon l'une quelconque des revendications précédentes, **caractérisé en ce qu'**à l'étape de classification (104), des plantes (60) classifiées dans la deuxième classe de plantes restent dans cette classe de plantes si elles ne se trouvent pas dans la partie d'image arrière (52) de l'information d'image (36) et/ou ne sont pas adjacentes à une bordure d'image latérale (48) de l'information d'image (36) et/ou s'étendent de la bordure d'image latérale (48) de l'information d'image (36) au-delà de la ligne de limite de reclassification (54).

8. Procédé (100) selon l'une quelconque des revendications précédentes, **caractérisé par** une étape d'identification (108) de rangées de plantes dans l'information d'image (36) en utilisant des plantes classifiées (22) de la première classe de plantes dans l'information d'image (36) au moyen d'un algorithme.

9. Procédé (100) selon l'une quelconque des revendications précédentes, **caractérisé par** une étape de détermination (110) d'un indice de plante pour une zone d'évaluation d'image définie (40) dans l'information d'image (36) obtenue en utilisant des plantes classifiées (23, 60) de la deuxième classe de plantes dans la zone d'évaluation d'image définie (40) au moyen d'un algorithme.

10. Procédé (100) selon la revendication 9, **caractérisé en ce que** la zone d'évaluation d'image (40) présente une largeur B(Auswerte) supérieure ou égale à la largeur d'image (B(Bild,h) et inférieure à la largeur d'image avant (B(Bild,v) de l'information d'image (36).

11. Procédé (100) selon la revendication 9 ou 10, **caractérisé en ce que** l'indice de plante représente un degré de couverture de la zone d'évaluation d'image (40) par de la matière végétale et/ou une quantité de matière végétale dans la zone d'évaluation d'image (40) et/ou un nombre de plantes classifiées (23, 60) dans la deuxième classe de plantes dans la zone d'évaluation d'image (40).

12. Procédé (100) selon l'une quelconque des revendications 9 à 11, **caractérisé par** une étape d'épandage (112) du milieu (20) sur les plantes classifiées (23, 60) de la deuxième classe de plantes en fonction de l'indice de plante déterminé au moyen d'une unité à buse de pulvérisation (16), en particulier un dispositif de pulvérisation agricole (10).

13. Procédé (100) selon l'une quelconque des revendications précédentes, **caractérisé en ce que** des plantes utiles (22, 22') et/ou des plantes de culture (22, 22') sont classifiées dans la première classe de plantes, et/ou des mauvaises herbes (23, 60) sont classifiées dans la deuxième classe de plantes.

14. Unité de classification qui est conçue pour exécuter les étapes suivantes consistant à :
- classifier (104) des plantes (22, 23, 60) dans une information d'image (36) obtenue dans au moins une première classe de plantes et dans au moins une deuxième classe de plantes au moyen d'un algorithme ; et
- reclassifier (106) des plantes (22') classifiées de la deuxième classe de plantes dans la première classe de plantes au moyen de l'algorithme si celles-ci s'étendent dans une partie d'image arrière (52) de l'information d'image (36), définie par une ligne de séparation d'image (50) définie, d'une bordure d'image latérale (48) de l'information d'image (36) au plus jusqu'à une ligne de limite de reclassification (54) définie.

15. Dispositif de pulvérisation agricole (10) pour épandre un milieu (20), en particulier un agent de pulvérisation liquide (20), sur des plantes (23, 60) d'une surface agricole (24) avec au moins une unité à buse de pulvérisation (16) pour épandre le milieu (20), au moins une unité de détection optique (18) pour détecter les plantes (22, 23, 60) et une unité de classification pour classifier les plantes (22, 23, 60) selon la revendication 14.

16. Programme informatique qui est conçu pour exécuter ou commander les étapes d'un procédé selon l'une quelconque des revendications 1 à 13 et/ou d'une unité de classification selon la revendication 14 lorsque le programme informatique est exécuté sur un ordinateur.

17. Support de stockage lisible par machine sur lequel est stocké un programme informatique selon la revendication 16.
